Europäisches Patentamt

European Patent Office

Office européen des brevets

(19)

(11) Veröffentlichungsnummer: **0 142 795**
B1

(12) EUROPÄISCHE PATENTSCHRIFT

(45) Veröffentlichungstag der Patentschrift:
08.02.89

(51) Int. Cl.⁴: C 09 K 3/10, F 16 J 15/10

(21) Anmeldenummer: 84113553.6

(22) Anmeldetag: 09.11.84

ERRATUM

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| DIE TEXTSTELLE | SEITE | SPALTE | ZEILE | LAUTET BERICHTIGT |
|---|---|---|---|---|
| und in Spezialsprühwerken, | 2 | 1 | 15 | und in Spezialrührwerken, |

Tag der Entscheidung
über die Berichtigung.
Date of decision on
rectification:              ) 02.05.89

Ausgabe- und Veröffentlichungstag:        )
Issue and publication    )
date:                      )   19.07.89
Date d'edition et de     )

Patbl.Nr)

EPB no: ) .89./.29

Europäisches Patentamt

European Patent Office

Office européen des brevets

(19)

(11) Veröffentlichungsnummer: **0 142 795**
**B1**

(12) **EUROPÄISCHE PATENTSCHRIFT**

(45) Veröffentlichungstag der Patentschrift:
**08.02.89**

(51) Int. Cl.⁴: **C 09 K 3/10, F 16 J 15/10**

(21) Anmeldenummer: **84113553.6**

(22) Anmeldetag: **09.11.84**

(54) **Flächiges Dichtungsmaterial.**

(30) Priorität: **17.11.83 DE 3341461**

(43) Veröffentlichungstag der Anmeldung:
**29.05.85 Patentblatt 85/22**

(45) Bekanntmachung des Hinweises auf die Patenterteilung:
**08.02.89 Patentblatt 89/6**

(84) Benannte Vertragsstaaten:
**AT BE CH DE FR GB IT LI NL SE**

(56) Entgegenhaltungen:
**FR-A- 2 482 124**

(73) Patentinhaber: **BASF Aktiengesellschaft,
Carl-Bosch-Strasse 38, D-6700 Ludwigshafen (DE)**

(72) Erfinder: **Berbner, Heinz, Im Klingenacker 9,
D-6942 Moerlenbach (DE)**
Erfinder: **Seid, Bernhard, Albrecht-Duerer-Ring 28,
D-6710 Frankenthal (DE)**
Erfinder: **Voelker, Heinz, Dr., Woogstrasse 37,
D-6703 Limburgerhof (DE)**
Erfinder: **Zettler, Hans Dieter, Bueckelhaube 35,
D-6718 Gruenstadt (DE)**

ACTORUM AG

## Beschreibung

Für das Abdichten gegen Flüssigkeiten und Gase werden Flachdichtungen eingesetzt. Solche Dichtungen wurden bisher im allgemeinen auf Basis von Mischungen aus Asbestfasern, anorganischen Füllstoffen und Kautschuk oder Polyisobutylen als Bindemittel hergestellt. Bekannt und genormt ist ein Teil dieser Materialien unter der Bezeichnung «It-Dichtungsplatten», für ein weiteres flächiges Dichtungsmaterial ist der Name «Zylinderkopfdichtung» üblich.

Bei der Herstellung der It-Dichtungen wird der Rohasbest zunächst gemahlen, im Reisswolf zerfasert und in Spezialsprühwerken, z.B. Knetern, in eine viskose Kautschuklösung eingebracht. Die Lösung enthält meistens bereits die Füllstoffe. Die eigentliche Fertigung der flächigen Dichtungsmaterialien erfolgt auf sogenannten It-Plattenkalandern. Dabei wird die pastenförmige It-Masse auf der Arbeitswalze auf eine bestimmte Schichtdicke verformt und verdichtet. Durch Erhitzen auf 140 bis 160 °C verdampft das Lösungsmittel und das Fell wird fest. Mehrere Schichten werden bis zur gewünschten Dicke zusammengefügt, beispielsweise durch Kreuzdoublierung, und die fertige Platte abgezogen.

Die Herstellung der Zylinderkopfdichtungen erfolgt in der Weise, dass zunächst Asbest in Wasser gemahlen wird. Anschliessend werden wässrige Bindemittel und eventuell Füllstoffe zugegeben. Diese wässrige Suspension wird dann auf Papiermaschinen, z.B. einer Langsiebmaschine, zu Papieren weiterverarbeitet. Nach Trocknung und eventueller Temperung erfolgt die Konfektionierung.

Solche Dichtungen erfüllen zwar ihre technische Funktion, von entscheidendem Nachteil ist jedoch die Verwendung von Asbest, der zu gesundheitlichen Gefährdungen bei der Herstellung und Verarbeitung der Platten Anlass geben kann. Man hat daher schon versucht, die Asbestfasern für diesen Anwendungszweck zu ersetzen, beispielsweise durch ein Gemisch aus Phenolharz-Fasern und Polymerfasern auf Basis von aromatischen Polyamiden (FR-A-2 482 124). Nachteilig an diesen Materialien ist vor allem ihr hoher Preis und die unbefriedigende Nassfestigkeit bei der Herstellung.

Es wurde nun gefunden, dass ein Verbundwerkstoff aus

A. 2 bis 90 Gew.% Melaminharz-Fasern und/oder Fibrillen,

B. 5 bis 90 Gew.% feinteiliger anorganischer Füllstoffe,

C. 2 bis 50 Gew.% organischer Bindemittel und gegebenenfalls

D. 0,1 bis 50 Gew.% Thermoplast-Fibrillen sich zur Herstellung von Dichtungen hervorragend eignet, wobei der Verbundwerkstoff folgende Eigenschaften aufweist:

a) die Gasdurchlässigkeit nach DIN 3535 ist kleiner als 1,0 cm³/min, sie ist vorzugsweise kleiner als 0,6 cm³/min und beträgt insbesondere 0,05 bis 0,1 cm³/min,

b) die Druckstandfestigkeit nach DIN 52 913 ist grösser als 10 N/mm², sie beträgt vorzugsweise 20 bis 50 N/mm²,

c) die Kompressibilität nach ASTM F36 beträgt 3 bis 25%,

d) die Rückfederung nach ASTM F36 beträgt 30 bis 80%,

e) die Quellung nach ASTM F146 ist kleiner als 15%.

Obwohl Fasern aus Melaminharz eine geringere Festigkeit aufweisen als Fasern aus den bisher eingesetzten aromatischen Polyamiden, weist das erfindungsgemässe Dichtungsmaterial überraschenderweise eine mit den bekannten Dichtungsmaterialien vergleichbare Druckstandfestigkeit und Kompressibilität auf.

A. Melaminharz-Fasern sind aufgrund ihrer hohen Temperaturbeständigkeit und Unbrennbarkeit als Ersatz für Asbestfasern besonders geeignet. Ihre Herstellung und ihre Eigenschaften sind bekannt, z.B. aus der DE-A 2 364 091. Sie werden bevorzugt aus hochkonzentrierten Lösungen von Melamin/Formaldehyd-Vorkondensationsprodukten durch Abschleudern, Fadenziehen, Extrudieren oder durch Zerstäuberprozesse, z.B. mittels Zweistoffdüsen, gewonnen. Die dabei erhaltenen Fasern werden vorgetrocknet, gegebenenfalls gereckt und das Melaminharz wird bei Temperaturen von 150 bis 250 °C gehärtet. Die Fasern weisen zweckmässigerweise eine Schlichte zur Haftverbesserung auf. Sie sind gewöhnlich 5 bis 50 µm dick und 1 bis 100 mm lang. Ihr Anteil in dem Dichtungsmaterial beträgt 2 bis 90, vorzugsweise 5 bis 50 Gew.%. Ihre spezifische Oberfläche nach BET beträgt im allgemeinen weniger als $2 \, m^2 \cdot g^{-1}$.

Die Fasern sind gewöhnlich 3 bis 40 µm dick und 1 bis 100 mm lang. Ihr Anteil im Dichtungsmaterial beträgt ebenfalls 2 bis 90 Gew.%, vorzugsweise 5 bis 50 Gew.%.

Die Melaminharz-Fasern können ganz oder teilweise durch Fibrillen aus diesem Harz ersetzt sein. Wegen ihrer verästelten Struktur bewirken diese einen besseren Zusammenhalt zwischen Bindemittelmatrix und Faserarmierung. Fibrillen weisen eine Länge von 0,1 bis 200, insbesondere 0,5 bis 50 mm auf, eine Dicke von weniger als 5 µm, insbesondere von 0,01 bis 0,5 µm und eine spezifische Oberfläche nach BET von mindestens $5 \, m^2 \cdot g^{-1}$ auf.

B. Als Füllstoffe kommen feinteilige anorganische Stoffe, wie z.B. Zement, Talkum, Kaolin, Schiefermehl, Quarzmehl, Kalk, Magnesia, Schwerspat, Russ, Kieselgur oder Mischungen davon in Frage. Ihr Anteil beträgt 5 bis 90 Gew.%, vorzugsweise 10 bis 80 Gew.%. Sie erhöhen die Dauerstandfestigkeit der Dichtungen und verhindern, dass sie bei hoher Belastung kriechen.

C. Als Bindemittel kommen übliche organische Polymere als wässrige Dispersion oder als Lösung in organischen Lösungsmitteln, z.B. Toluol, in Frage. Es sind vorzugsweise Kautschuke, wie z.B. Naturkautschuk, Polybutadien, Nitrilkautschuk oder Polyisopren. Für säurefeste Materialien wird Polyisobutylen verwendet. Grundsätzlich können auch Polyacrylate sowie Phenol- und Melaminharze verwendet werden. Ihr Anteil beträgt 2 bis 50, vorzugsweise 5 bis 30 Gew.%. Sie bewirken den Zusammenhalt der Komponenten im Dichtungsmaterial.

D. Durch die Zugabe von Thermoplast-Fibrillen wird eine gute Verarbeitbarkeit auf der Papiermaschine erreicht, da die Fibrillen grosse spez. Oberflächen aufweisen und vliesbildend sind. Ausserdem wird eine gleichmässige Verteilung der Füllstoffe und des Bindemittels erzielt. Polymerfibrillen sind Kurzfasern mit blattbildenden Eigenschaften. Im englischen Sprachgebrauch ist dafür der Ausdruck «fibrids» üblich. Geeignete Thermoplaste sind z.B. PVC, PS, PE, PP, PA, PAI, PET und PAN.

Fibrillen weisen eine verästelte Struktur auf. Ihre Länge beträgt vorzugsweise 0,1 bis 200, insbesondere 0,5 bis 50 mm, ihre Dicke weniger als 5 $\mu$m, insbesondere 0,01 bis 0,5 $\mu$m, wobei die Dicke der feinen Einzelfasern, mikroskopisch bei einer Vergrösserung von 1:20 000 bestimmt, gemeint ist.

Sie werden im allgemeinen hergestellt durch Ausfällen einer Lösung des Polymeren unter Energiezufuhr. Geeignete Herstellverfahren sind z.B. beschrieben in der DE-A 2 208 921, 2 326 143 und 2 516 563.

Bei einer besonderen Ausführungsform werden mineralisierte Fibrillen verwendet. Die Mineralisierung bewirkt eine Verbesserung der Temperaturbeständigkeit. Mineralisierte Fibrillen werden hergestellt, indem man geeignete anorganische Stoffe zusammen mit dem Polymeren ausfällt, wie es z.B. in DE-A-3 225 708 und in DE-A-3 341 462 beschrieben ist.

Bevorzugte mineralisierte Fibrillen bestehen aus einem thermoplastischen Polymeren, welches mit 0,1 bis 900, vorzugsweise 1 bis 100 Gew.% eines Oxids eines ein- bis vierwertigen Metalls, Kieselsäure oder eines Silikats eines ein- bis dreiwertigen Metalls modifiziert ist.

Bevorzugte Modifizierungsmittel sind Calciumoxid, Aluminiumoxid, Calciumsilikat, Kieselsäure, z.B. als «Aerosil», Zement, z.B. als «Eisenportlandzement», Natriumsilikat, z.B. als «Wasserglas», Silane, z.B. Methyltrichlorsilan, Phenyltrichlorsilan oder Ethylpolysiloxan, Siliciumtetrachlorid und das Reaktionsprodukt aus Zement oder Calciumoxid und Siliciumtetrachlorid, das sich beispielsweise in der Polymerisatlösung in situ bildet. Die Zusätze können einzeln oder im Gemisch eingesetzt werden.

Die modifizierten Fibrillen sind durch folgende Eigenschaften charakterisiert:

a) einem Mahlgrad nach Schopper-Riegler von 15 bis 100°SR, vorzugsweise von 20 bis 80°SR,

b) einer spezifischen Oberfläche nach BET von grösser als 10 $m^2/g^{-1}$.

Die Schopper-Riegler-Methode ist beschrieben bei Korn-Burgstaller, Handbuch der Werkstoffprüfung, 2. Auflage 1953, 4. Band, Papier und Zellstoffprüfung, Seite 388ff, Springer Verlag. Für die Durchführung dieser Bestimmung müssen die Fibrillen in eine wässrige Suspension mit konstanter Stoffdichte (2 g Fibrillen/l und 20 °C) gebracht werden. Es wird diejenige Menge Wasser ermittelt, die unter bestimmten Bedingungen von den suspendierten Fibrillen zurückgehalten wird. Die aufgenommene Menge Wasser ist umso grösser, je höher die Fibrillierung der Fibrillen ist. Die Schopper-Riegler-Werte eines ungemahlenen Sulfitzellstoffs liegen bei 12 bis 15°SR.

Die Bestimmung der spezifischen Oberfläche erfolgte nach der BET-Methode durch Stickstoffadsorption (S. Brunauer, T.H. Emmett, E. Teller, Journal American Chemical Society, Band 60, S. 309, [1938]) an Fibrillen, die bei −190 °C gefriergetrocknet wurden.

Die Fibrillen sind in den Dichtungsmaterialien in Mengen von 0,1 bis 50, vorzugsweise von 0,5 bis 20 Gew.% und insbesondere von 1 bis 15 Gew.% enthalten.

Die Herstellung der flächigen Dichtungen kann nach den gleichen Verfahren erfolgen, die auch bei Verwendung von Asbest zur Anwendung kommen. So werden bei der Herstellung der It-ähnlichen Materialien die sogenannten It-Kalander eingesetzt. Die Herstellung von Zylinderkopfdichtungen erfolgt z.B. mittels Lang- oder Rundsiebmaschinen.

Bei einer bevorzugten Ausführungsform zur Herstellung von Zylinderkopfdichtungen werden zunächst die Komponenten A, B und gegebenenfalls D als Feststoffe und die Komponente C als wässrige Dispersion mit Wasser angerührt, dann wird die Hauptmenge des Wassers mechanisch abgetrennt und die pastenförmige Masse verpresst, wobei eine Verdichtung erfolgt. Gleichzeitig oder anschliessend wird sie auf eine Temperatur von 120 bis 250 °C erhitzt, wobei das restliche Wasser vollends verdampft und das Bindemittel aushärtet bzw. vulkanisiert.

Die Herstellung von It-Dichtungen erfolgt auf sogenannten It-Kalandern, wobei die Komponenten A, B und gegebenenfalls D zusammen mit einer Lösung der Komponente C auf Walzen oder Knetern vermischt werden. Anschliessend werden auf beheizten Kalandern Folien ausgewalzt, wobei das Lösungsmittel verdampft. Mehrere Schichten davon können bis zur gewünschten Dicke, die vorzugsweise zwischen 0,4 und 4 mm liegt, zusammengefügt werden. Das flächige Material kann z.B. durch Stanzen zu Dichtungen weiterverarbeitet werden.

Die Dichtungen können als Flachdichtungen, z.B. im Automobilsektor als Zylinderkopfdichtungen oder als Flachdichtungen im Gerätebau eingesetzt werden.

Die in den Beispielen genannten Teile und Prozente beziehen sich auf das Gewicht.

Beispiel 1

3 Teile PVC-Fibrillen, die mit 12% Zement modifiziert sind und einen Mahlgrad von 52°SR aufweisen, werden in 1000 Teilen Wasser unter Rühren dispergiert. Nach 3 min werden 70 Teile Melaminharz-Fasern mit einer mittleren Länge von 6 mm und einer Dicke von 13 bis 20 mm zugegeben, nach weiteren 5 min 10 Teile Portlandzement und 10 Teile Talkum, anschliessend werden 14 Teile eines 80%igen wässrigen Naturkautschuk-Latex zugesetzt. Nach einer Rührzeit von 10 min lässt man die Dispersion absitzen und entfernt die Hauptmenge des Wassers mechanisch durch Abgiessen und Abpressen. Die pastenartige Masse wird in einer Form mit den Massen 250 × 130 × 1,3 mm bei einem Druck von 150 bar 15 min lang verpresst und anschliessend bei einer Temperatur von 200 °C bis zur vollständigen Entfernung des Wassers getempert.

Die erhaltene Dichtungsplatte hat eine Dicke von 1,3 mm. In Anlehnung an DIN 52 913 wurde ein Druckstandversuch durchgeführt. Bei einer Belastung von 500 Kp · cm$^{-2}$ betrug die Dicke der Probe nach der Entlastung noch 1,22 mm.

Folgende weitere Eigenschaften wurden gemessen:
a)   Gasdurchlässigkeit:          0,08 cm$^3$/min
b)   Druckstandfestigkeit:        32 N/mm$^2$
c)   Kompressibilität:            9%
d)   Rückfederung:                55%
e)   Temperaturbeständigkeit:     200 °C
f)   Quellung:                    9%

Beispiel 2

Man arbeitet wie in Beispiel 1, bereitet aber eine Mischung folgender Zusammensetzung:
   0,5% PVC-Fibrillen,
   70 % Melaminharzfasern,
   20 % Zement,
   9,5% Kautschuk.

Beispiel 3

5 Teile Polyethylenfibrillen, die mit 15 Teilen Zement modifiziert sind und einen Mahlgrad von 32°SR aufweisen, werden in 1000 Teilen Wasser dispergiert. Das Polyethylen hat eine Dichte von 0,96 g/cm$^3$ und einen Schmelzindex von 5. Nach 5 Minuten Dispergierzeit werden 80 Teile Melaminharzfasern mit einer mittleren Länge von 6 mm und einem mittleren Durchmesser von 15 μm zugegeben. Nach einer weiteren Rührzeit von 5 Minuten werden 20 Teile Portlandzement zugesetzt, anschliessend werden als Bindemittel 12 Teile eines 80%igen wässrigen Naturkautschuk-Latex zugegeben. Nach einer weiteren Mischzeit von 10 Minuten wird die Hauptmenge des Wassers durch Abpressen entfernt. Die so erhaltene pastenförmige Masse wird in eine Form 250 × 130 × 1,5 gegeben und bei einem Druck von 150 bar 15 min lang verpresst und anschliessend bei 200 °C getempert.

Die erhaltene Dichtungsplatte hat eine Dicke von 1,4 mm. In Anlehnung an DIN 52 913 wurde ein Druckstandversuch durchgeführt. Bei einer Belastung von 500 kp/cm$^2$ betrug die Dicke nach der Entlastung noch 1,31 mm.

**Patentansprüche**

1. Flächiges Dichtungsmaterial aus
   A. 2 bis 90 Gew.% Melaminharz-Fasern und/oder -Fibrillen,
   B. 5 bis 90 Gew.% feinteiligen anorganischen Füllstoffen,
   C. 2 bis 50 Gew.% organischen Bindemitteln,
   D. 0,1 bis 50 Gew.% Thermoplast-Fibrillen,
wobei die Prozentzahlen sich auf 100 addieren, mit folgenden Eigenschaften:
   a) die Gasdurchlässigkeit nach DIN 3535 ist kleiner als 1,0 cm$^3$/min,
   b) die Druckstandfestigkeit nach DIN 52 913 ist grösser als 10 N/mm$^2$,
   c) die Kompressibilität nach ASTM F36 beträgt 3 bis 25%,
   d) die Rückfederung nach ASTM F36 beträgt 30 bis 80%,
   e) die Quellung nach ASTM F146 ist kleiner als 15%.

2. Dichtungsmaterial nach Anspruch 1, dadurch gekennzeichnet, dass es 0,1 bis 50 Gew.% Fibrillen D aus einem thermoplastischen Polymeren, insbesondere Polyvinylchlorid, Polystyrol, Polyethylen, Polypropylen, Polyamid, Polyamidimid, Polyester oder Polyacrylnitril, enthält.

3. Dichtungsmaterial nach Anspruch 1, dadurch gekennzeichnet, dass es Melaminharz-Fasern mit einer spezifischen Oberfläche nach BET von weniger als 2 m$^2$.g$^{-1}$ enthält.

4. Dichtungsmaterial nach Anspruch 1, dadurch gekennzeichnet, dass es Melaminharz-Fibrillen mit einer spezifischen Oberfläche nach BET von mindestens 5 m$^2$.g$^{-1}$ enthält.

**Claims**

1. A sheet-like packing material which consists of
   A. from 2 to 90% by weight of melamine resin fibers and/or fibrils,
   B. from 5 to 90% by weight of finely divided inorganic fillers,
   C. from 2 5o 50% by weight of organic binders with or without
   D. from 0.1 to 50% by weight of thermoplastic fibrils,
the percentages summing to 100, and which has
   a) a gas permeability according to DIN 3535 of less than 1.0 cm$^3$/min,
   b) a compressive creep strength according to DIN 52 913 which is greater than 10 N/mm$^2$,
   c) a compressibility according to ASTM F36 of from 3 to 25%,
   d) a resilience according to ASTM F36 of from 30 to 80% and
   e) swelling according to ASTM F146 of less than 15%.

2. A packing material as claimed in claim 1, which contains from 0.1 to 50% by weight of fibrils D consisting of a thermoplastic polymer, in particular polyvinyl chloride, polystyrene, polyethylene, polypropylene, nylon, a polyamideimide, a polyester or polyacrylonitrile.

3. A packing material as claimed in claim 1, which contains melamine resin fibers having a BET specific surface area of less than 2 m$^2$.g$^{-1}$.

4. A packing material as claimed in claim 1, which which melamine resin fibrils having a BET specific surface area of not less than 5 m$^2$.g$^{-1}$.

## Revendications

1. Matériau d'étanchéité en nappe, constitué de
A. 2 à 90% en poids de résine de mélamine en fibres et(ou) fibrilles,
B. 5 à 90% en poids de matières de charge inorganiques en fines particules,
C. 2 à 50% en poids de liants organiques et éventuellement
D. 0,1 à 50% en poids de matière thermoplastique en fibrilles,
la somme des pourcentages étant égale à 100, possédant les propriétés ci-après:
a) une perméabilité aux gaz selon la norme DIN 3535 inférieure à 1,0 cm³ par minute;
b) une résistance au fluage sous pression selon la norme DIN 52 913 supérieure à 10 N/mm²;
c) une compressibilité selon la norme ASTM F36 comprise entre 3 et 25%;
d) une reprise élastique selon la norme ASTM F36 comprise entre 30 et 80% et
e) un gonflement selon la norme ASTM F146 inférieur à 15%.

2. Matériau d'étanchéité suivant la revendication 1, caractérisé en ce qu'il comprend entre 0,1 et 50% en poids de fibrilles D en un polymère thermoplastique, en particulier en poly(chlorure de vinyl), en polystyrène, en polyéthylène, en polypropylène, en polyamide, en polyamide-imide, en polyester ou en polyacrylonitrile.

3. Matériau d'étanchéité suivant la revendication 1, caractérisé en ce qu'il contient des fibres en résine de mélamine avec une surface spécifique d'après BET inférieure à 2 m² par g.

4. Matériau d'étanchéité suivant la revendication 1, caractérisé en ce qu'il contient des fibrilles en résine de mélamine avec une surface spécifique d'après BET d'au moins 5 m² par g.